# EUROPEAN PATENT SPECIFICATION

(11) **EP 3 431 887 B1**
(45) Date of publication and mention of the grant of the patent: **30.06.2021**
(21) Application number: 17181723.2
(22) Date of filing: 17.07.2017
(51) Int. Cl.: F24D 19/08, F16K 24/04

(54) **DEAERATOR FOR AIR CONDITIONING INSTALLATIONS**
ENTLÜFTER FÜR KLIMATISIERUNGSANLAGEN
DÉSAÉRATEUR POUR INSTALLATIONS DE CONDITIONNEMENT D'AIR

(43) Date of publication of application: 23.01.2019
(73) Proprietor: Caleffi S.p.A., 28010 Fontaneto d'Agogna, Novara (IT)
(72) Inventor: CALEFFI, Marco, 28010 Fontaneto d'Agogna Novara (IT)
(74) Representative: Siniscalco, Fabio

(56) References cited:
- EP-A1- 1 227 282
- EP-A1- 2 607 759
- EP-A1- 2 829 811
- DE-U1-202017 103 524
- NL-C- 2 009 588

## Description

### BACKGROUND OF THE INVENTION

The object of this invention is a deaerator that can be used in air conditioning installations.

### PRIOR ART

Deaerators are known that are used to eliminate continuously the air contained in the fluid in hydraulic circuits of air conditioning installations, or of heating or cooling installations.

The circulation of completely deaerated fluid enables the installations to operate in optimum conditions without problems of noise, corrosion, local overheating and mechanical damage.

One type of deaerator has as an active part a reticulated metal structure that creates swirling motions to promote the release of air bubbles and the adhesion thereof to the surfaces. The bubbles combine together and increase in volume until the hydrostatic thrust is such as to overcome the force of adhesion to the metal structure. These bubbles then rise up to the high part of the deaerator, from which they are evacuated by an automatic air relief float valve.

In heating installations that use a boiler and a circulating pump, this type of deaerator is preferably installed after the boiler on the suction side of the pump because the points are there in which most bubbles are formed.

Known deaerators are rather bulky and installing thereof is greatly constrained by the need to maintain the air-expelling part upward and perfectly vertical. This obviously limits possible installation conditions of known deaerators.

There are deaerators on the market that ensure the possibility of being installed in different positions; but the geometry necessary for this purpose leads to the overall dimensions of the deaerator being even greater.

Known deaerators may also be subject to fluid losses from the air relief valve in the event of great flowrates along the circuit of the installation.

DE202017103524U1 relates to an air relief valve.

### OBJECT OF THE INVENTION

The object of the present invention is to propose a deaerator for air conditioning installations that is able to overcome the aforesaid problems.

### SHORT DESCRIPTION OF THE INVENTION

This object is achieved by a deaerator for air conditioning installations according to claim 1.

NL2009588C refers to the preamble of claim 1.

### SHORT DESCRIPTION OF THE DRAWINGS

In order to better understand the invention, a description is given below of a nonlimiting exemplary embodiment thereof, illustrated in the attached drawings, in which:
fig. 1 is a perspective view of a deaerator for air conditioning installations according to the invention;
fig. 2 is a side view of the deaerator of fig.1;
fig. 3 is a front view of the deaerator of fig.1;
fig. 4 is a lateral section view, according to the line IV-IV of fig. 3, of the deaerator of fig. 1;
fig. 5 is a plan section view, according to the line V-V of fig. 2, of the deaerator of fig. 1;
fig. 6 is a perspective section view of the deaerator of fig.1;
fig. 7 is a rear section view, according to the line VII-VII of fig. 2, of the deaerator of fig. 1;
fig. 8 is a side view of the deaerator of fig. 1 in another operating configuration;
fig. 9 is a lateral section view, similar to the lateral section view of fig. 4, of the deaerator of fig. 1 in the operating configuration of fig. 8.

### DETAILED DESCRIPTION OF THE INVENTION

The illustrated deaerator, indicated generally by 10, has a body consisting of two hollow parts 11 and 12.

The part 11 of the deaerator 10 consists of a substantially cylindrical container 13 that protrudes laterally into a flange 14. The container 13 is closed above by a cover 15 that screws sealingly onto the container 13. Inside the container 13 a chamber 16 is defined. On the bottom of the chamber 16 a series of flow-disturbing fins 17 is obtained in one piece. On the fins 17 a float 18 rests that is connected by a lever 19 to a shutter 20 communicating with a relief cap 21 fixed to the cover 15. The float 18 is guided by ribs 22 obtained in the chamber 16 that run along the cylindrical wall of the chamber 16.

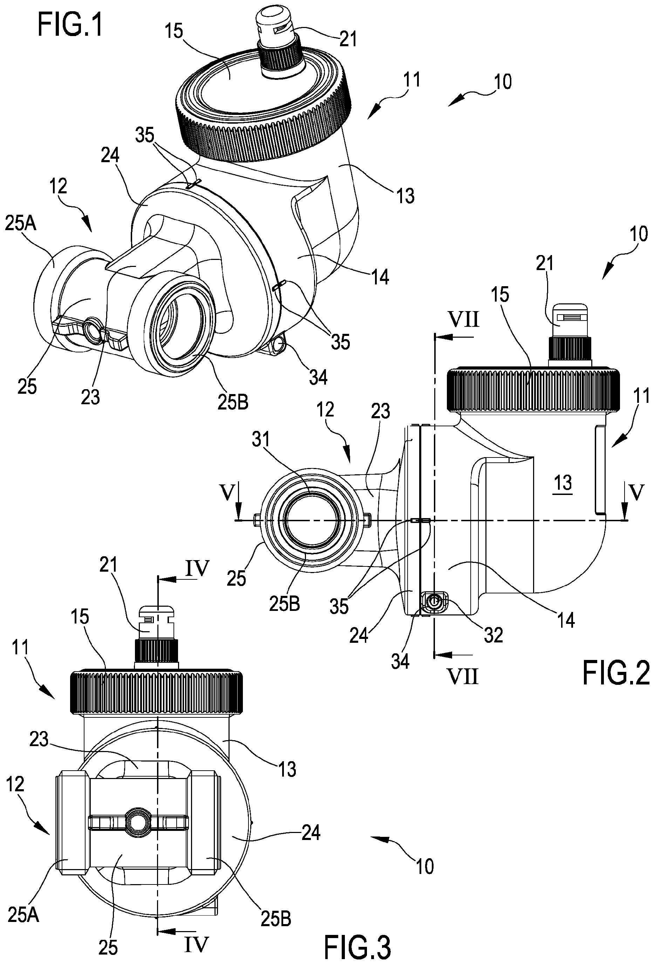

The part 12 of the deaerator 10 is formed by a hollow union 23 provided with a flange 24 and by a cylindrical conduit 25 that is perpendicular to the union 23 and obtained in one piece with the latter. The union 23 is arranged off-set with respect to the flange 24, as shown in fig. 3. The conduit 25 is provided at the ends with two connections 25A and 25B. The union 23 is internally in communication with the conduit 25. In the union 23 a series of walls 26 on four sides and a middle wall 27 between the walls 26 are formed. The walls 26, 27 run along the union 23 and form two longitudinal channels 28 and 29 for the flow of the fluid inside the union 23. The walls 26,27 also form cavities 30 inside the union 23. One end of the walls 26,27 ends at the conduit 25, whereas the other end of the walls 26,27 ends near the chamber 16. At the middle wall 27 the conduit 25 has internally a deflector 31 in the form of an annular ridge.

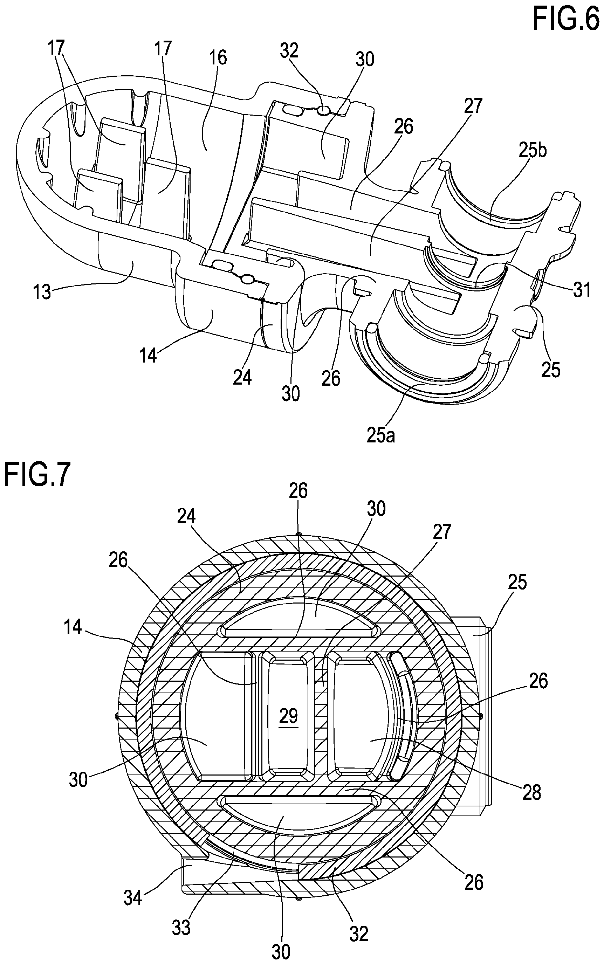

Parts 11 and 12 of the deaerator 10 are constrained axially by a fixing wire 32, made of plastics, inserted into an annular channel 33 (fig.7) half formed in the flange 14 of the part 11 and half in the flange 24 of the part 12. In the flange 14 of the part 11 an entry hole 34 is obtained for inserting the fixing wire 32. The constraint of the fixing wire 32 anyway permits reciprocal rotation of the two parts 11 and 12 and in particular rotation of the flanges 14 and 24 with respect to one another. On the flanges 14 and 24 reference marks 35 are formed that define a series of angular positions of the parts 11 and 12 of the deaerator 10 with respect to one another.

The operation of the disclosed and illustrated deaerator 10 is as follows.

The deaerator 10 is mounted along the hydraulic circuit of the air conditioning installation in a suitable position connecting the two connections 25A and 25B of the conduit 25 to two branches of the circuit.

In the figures it is postulated that the fluid to be deaerated enters the deaerator 10 through the connection 25A and exits the deaerator 10 through the connection 25B.

The fluid that flows through the conduit 25 is intercepted by the deflector 31 and a part of this fluid flows into the channel 28 and enters the chamber 16.

In this passage from the conduit 25 to the channel 28 the fluid undergoes a first deceleration.

From the channel 28 the fluid enters the chamber 16 where the fluid undergoes further deceleration and enters a turbulence regime owing to the presence of the fins 17 and of the cavities 30.

The flow of liquid into the chamber 16 lifts the float 18 along the guide ribs 22 so as to take the shutter 20 through the lever 19 to the closed position.

The deceleration of the fluid and the turbulence regime promote the air bubbles in the fluid staying inside the chamber 16 and facilitate the natural separation of the air from the fluid. The air bubbles in the chamber 16 rise upwards, flowing through the gap between the float 18 and the ribs 22. The air bubbles collect in the upper part of the chamber 16 and when a certain amount of air collects it replaces the water and lowers the floating point of the float 18, causing the shutter 20 to open and the air to vent to the outside through the cap 21.

The deaerated fluid in the chamber 16 exits therefrom through the channel 29 and returns to the conduit 25.

As the fluid continues to circulate in the hydraulic circuit, the fluid is completely deaerated in several passages inside the deaerator 10.

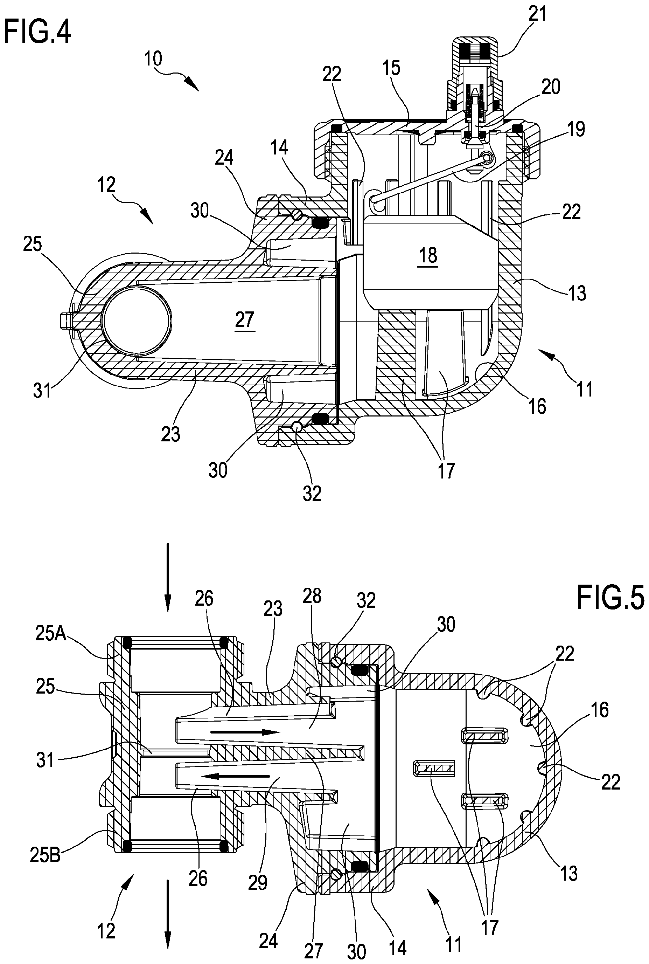

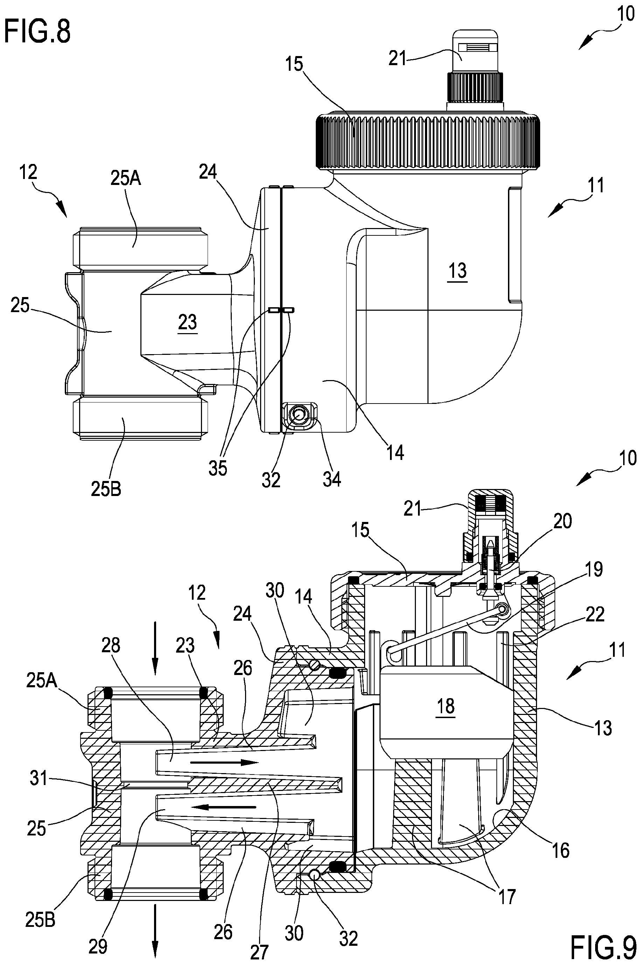

In figs 8,9 the conduit 25 is rotated by 90° with respect to the position of figures 1-7, owing to the possibility of rotating the flange 24 of the part 12 of the deaerator 10 with respect to the flange 14 of the part 11 of the deaerator 10.

In this position, the operation of the deaerator 10 is similar to what is seen in the preceding position of the conduit 25.

It is clear that the conduit 25 can be rotated to any angular position with respect to the container 13 to adapt to different mounting situations.

The deaerator 10 operates in the same manner, reversing the flow of fluid into the conduit 25.

The disclosed and illustrated deaerator 10 has different advantages.

Above all, the deaerator 10 is very compact.

The possibility of rotating the conduit 25 with respect to the container 13, of using the deaerator 10 in both flow directions of the fluid in the conduit 15, and the offsetting of the union 23 with respect to the flange 24, enable the deaerator 10 to be installed and operated in any installation condition, giving the deaerator 10 great versatility.

Resting the float 18 on the fins 17 and guiding the float 18 by the ribs 22 gives stability to the float 18 in both static and dynamic conditions. The stability of the float 18 and the low speed of the fluid in the chamber 16 prevent accidental escapes of fluid from the relief cap 21.

The deaerator 10 generally has a simple structure and is thus constructionally cheap and is further simple in operation and thus reliable.

The connection between part 11 and part 12 of the deaerator 10 by the fixing wire 32 enables the deaerator 10 to be maintained compact.

It is clear that variations on and/or additions to what has been disclosed and illustrated in the attached drawings can be provided.

In particular, the configuration of the various components and elements can vary according to different needs.

For example, the fins 17 and the walls 26,27 can vary in shape and number.

The deflector does not necessarily have to be annular, but may just affect one portion of the annular section of the conduit.

It must nevertheless be emphasised that the illustrated configuration is constructionally simple and functionally valid.

## Claims

1. Deaerator (10) for deaerating a fluid in an air conditioning installation, having a valve body comprising a container (13) containing an air relief valve (18-21) and further comprising a conduit (25) for connecting to the installation, wherein the conduit (25) is sealingly connected to the container (13) by a union (23) so as to be able to rotate with respect to the container (13), wherein in the conduit (25) and in the union (23) fluid intercepting and guiding means (26,27,31) are provided for conveying the delivery fluid to the container (13) and from here conveying the deaerated return fluid to the conduit (25) and wherein flow disturbing means (17,30) are provided for separating the air from the fluid and driving the air relief valve, wherein the intercepting and guiding means comprise a deflector (31) obtained in the conduit (25) and walls (26,27) obtained in the union (23), **characterized in that** the walls obtained in the union (23) comprise a series of walls (26) on four sides and a middle wall (27), that form two longitudinal channels (28,29), respectively fluid delivery and return channels, along the union (23), at the middle wall (27) the conduit (25) has internally the deflector (31) in the form of an annular ridge, wherein the container (13) and the union (23) are connected by two respective flanges (14,24), and wherein the union (23) is arranged offset with respect to the flanges (14,24).

2. Deaerator according to claim 1, wherein the flow disturbing means comprise a series of fins (17) arranged on the bottom of the container (13).

3. Deaerator according to claim 1 or 2, wherein the flow disturbing means comprise a plurality of cavities (30) formed in the union (23).

4. Deaerator according to claim 3, wherein the cavities (30) are formed by walls (26) obtained inside the union (23), that also perform the function of guiding the flow.

5. Deaerator according to any preceding claim , wherein the flanges (14,24) are reciprocally secured by an annular wire (32) inserted into an annular channel (33) half formed in one flange (14) and half formed in the other flange (24).

6. Deaerator according to any preceding claim, wherein the air relief valve comprises a float (18) connected by a lever (19) to a shutter (20) communicating with a relief cap (21) fixed to a cover (15) of the container (13), the float (18) moving in the container (13) and driving the shutter (20) according to the amount of air inside the container (13).

7. Deaerator according to claim 6, wherein the float (18) is supported by a series of fins (17) that also perform the function of disturbing the flow.

8. Deaerator according to claim 6 or 7, wherein the movement of the float (18) is guided by a series of inner ribs (22) of the container (13).

9. Deaerator according to any preceding claim, wherein reference means (35) are provided to define a series of angular positions of the conduit (25) with respect to the container (13).

## Patentansprüche

1. Entlüfter (10) zum Entlüften eines Fluides in einer Klimatisierungsinstallation, der einen Ventilkörper aufweist, der einen Behälter (13), der ein Luftüberdruckventil (18-21) enthält, umfasst und weiter eine Leitung (25) zur Verbindung mit der Installation umfasst, wobei die Leitung (25) dichtend mit dem Behälter (13) durch einen Zusammenschluss (23) verbunden ist, um im Stande zu sein, sich in Bezug auf den Behälter (13) zu drehen, wobei in der Leitung (25) und in dem Zusammenschluss (23) Fluidabfang- und Führungsmittel (26,27,31) zum Befördern des Abgabefluides an den Behälter (13) bereitgestellt sind und von hier das entlüftete Rückgabefluid an die Leitung (25) befördert wird und wobei Flussstörmittel (17,30) zum Trennen der Luft von dem Fluid und Antreiben des Luftüberdruckventils bereitgestellt sind, wobei die Abfang- und Führungsmittel einen Deflektor (31), der in der Leitung (25) enthalten ist, und Wände (26,27), die in dem Zusammenschluss (23) enthalten sind, umfassen, **dadurch gekennzeichnet, dass** die Wände, die in dem Zusammenschluss (23) enthalten sind, eine Reihe von Wänden (26) an vier Seiten und eine Mittelwand (27) umfassen, die zwei Längskanäle (28,29), Fluidabgabe- beziehungsweise Rückgabekanal, entlang des Zusammenschlusses (23) bilden, die Leitung (25) bei der Mittelwand (27) innenliegend den Deflektor (31) in der Form eines ringförmigen Stegs aufweist, wobei der Behälter (13) und der Zusammenschluss (23) durch zwei jeweilige Flansche (14,24) verbunden sind und wobei der Zusammenschluss (23) in Bezug auf die Flansche (14,24) versetzt eingerichtet ist.

2. Entlüfter nach Anspruch 1, wobei die Flussstörmittel eine Reihe von Finnen (17) an dem Boden des Behälters (13) eingerichtet umfassen.

3. Entlüfter nach Anspruch 1 oder 2, wobei die Flussstörmittel eine Vielzahl von Hohlräumen (30) in dem Zusammenschluss (23) gebildet umfassen.

4. Entlüfter nach Anspruch 3, wobei die Hohlräume (30) von Wänden (26) gebildet werden, die innerhalb des Zusammenschlusses (23) enthalten sind, die auch die Funktion zur Führung des Flusses durchführen.

5. Entlüfter nach einem vorstehenden Anspruch, wobei die Flansche (14,24) reziprok durch einen ringförmigen Draht (32), der in einem ringförmigen Kanal (33), zur Hälfte in einem Flansch (14) gebildet und zur Hälfte in dem anderen Flansch (24) gebildet, eingesetzt ist, gesichert wird.

6. Entlüfter nach einem vorstehenden Anspruch, wobei das Luftüberdruckventil einen Schwimmer (18) umfasst, der durch einen Hebel (19) mit einem Verschluss (20) verbunden ist, der mit einer Überdruckkappe (21), die an einer Abdeckung (15) des Behälters (13) befestigt ist, verbunden ist, wobei sich der Schwimmer (18) in dem Behälter (13) bewegt und den Verschluss (20) gemäß der Luftmenge innerhalb des Behälters (13) antreibt.

7. Entlüfter nach Anspruch 6, wobei der Schwimmer (18) von einer Reihe von Finnen (17) getragen wird, die auch die Funktion zum Stören des Flusses durchführen.

8. Entlüfter nach Anspruch 6 oder 7, wobei die Bewegung des Schwimmers (18) von einer Reihe von Innenrippen (22) des Behälters (13) geführt wird.

9. Entlüfter nach einem vorstehenden Anspruch, wobei Bezugsmittel (35) bereitgestellt sind, um eine Reihe an Winkelpositionen der Leitung (25) in Bezug auf den Behälter (13) zu definieren.

## Revendications

1. Désaérateur (10) pour désaérer un fluide dans une installation de conditionnement d'air, présentant un corps de soupape comprenant un récipient (13) contenant une soupape de purge d'air (18-21) et comprenant en outre un conduit (25) pour se raccorder à l'installation, dans lequel le conduit (25) est raccordé de manière étanche au récipient (13) par un raccord (23) de manière à être capable de pivoter par rapport au récipient (13), dans lequel, dans le conduit (25) et dans le raccord (23), des moyens d'interception et de guidage de fluide (26, 27, 31) sont fournis pour transporter le fluide de distribution jusqu'au récipient (13) et à partir de là, transporter le fluide de retour désaéré jusqu'au conduit (25) et dans lequel des moyens de perturbation d'écoulement (17, 30) sont fournis pour séparer l'air du fluide et entraîner la soupape de purge d'air, dans lequel les moyens d'interception et de guidage comprennent un déflecteur (31) obtenu dans le conduit (25) et des parois (26, 27) obtenues dans le raccord (23), **caractérisé en ce que** les parois obtenues dans le raccord (23) comprennent une série de parois (26) sur quatre côtés et une paroi médiane (27), qui forment deux canaux longitudinaux (28, 29), respectivement des canaux de distribution et de retour de fluide, le long du raccord (23), au niveau de la paroi médiane (27), le conduit (25) présente intérieurement le déflecteur (31) sous la forme d'une arête annulaire, dans lequel le récipient (13) et le raccord (23) sont raccordés par deux brides respectives (14, 24), et dans lequel le raccord (23) est agencé en décalage par rapport aux brides (14, 24).

2. Désaérateur selon la revendication 1, dans lequel les moyens de perturbation d'écoulement comprennent une série d'ailettes (17) agencées sur le fond du récipient (13).

3. Désaérateur selon la revendication 1 ou 2, dans lequel les moyens de perturbation d'écoulement comprennent une pluralité de cavités (30) formées dans le raccord (23).

4. Désaérateur selon la revendication 3, dans lequel les cavités (30) sont formées par des parois (26) obtenues à l'intérieur du raccord (23), qui effectuent également la fonction de guidage de l'écoulement.

5. Désaérateur selon une quelconque revendication précédente, dans lequel les brides (14, 24) sont fixées réciproquement par un fil annulaire (32) inséré dans un canal annulaire (33) formé à moitié dans une bride (14) et formé à moitié dans l'autre bride (24).

6. Désaérateur selon une quelconque revendication précédente, dans lequel la soupape de purge d'air comprend un flotteur (18) raccordé par un levier (19) à un diaphragme (20) communiquant avec un capuchon de purge (21) fixé à un couvercle (15) du récipient (13), le flotteur (18) se déplaçant dans le récipient (13) et entraînant le diaphragme (20) selon la quantité d'air à l'intérieur du récipient (13).

7. Désaérateur selon la revendication 6, dans lequel le flotteur (18) est supporté par une série d'ailettes (17) qui effectuent également la fonction de perturbation de l'écoulement.

8. Désaérateur selon la revendication 6 ou 7, dans lequel le mouvement du flotteur (18) est guidé par une série de nervures intérieures (22) du récipient (13).

9. Désaérateur selon une quelconque revendication précédente, dans lequel des moyens de référence (35) sont fournis pour définir une série de positions angulaires du conduit (25) par rapport au récipient (13).
